# FASCICULE DE BREVET EUROPEEN

(11) **EP 2 049 268 B1**
(45) Date de publication et mention de la délivrance du brevet: **28.02.2018**
(21) Numéro de dépôt: 07823319.4
(22) Date de dépôt: 20.07.2007
(51) Int. Cl.: B05B 3/02, A01G 25/16

(54) **DISPOSITIF D'ARROSAGE, ARROSEUR ET PROCEDE D'ARROSAGE**
BEWÄSSERUNGSSYSTEM, BEWÄSSERUNGSANLAGE UND BEWÄSSERUNGSVERFAHREN
IRRIGATION SYSTEM, IRRIGATOR AND IRRIGATION METHOD

(30) Priorité: 26.07.2006 FR 0606846; 24.04.2007 FR 0702952
(43) Date de publication de la demande: 22.04.2009
(73) Titulaire: Rain Bird Europe S.A.R.L., 13792 Aix en Provence Cédex 3 (FR)
(72) Inventeur: CAILLABA, Jean-Jacques, 13490 Jouques (FR)
(74) Mandataire: Santarelli
(86) Numéro de dépôt international: PCT/FR2007/001258
(87) Numéro de publication internationale: WO 2008/012422

(56) Documents cités:
- FR-A1- 2 855 369
- US-A- 3 782 630
- US-A- 3 820 714
- US-A- 4 522 338

## Description

La présente invention concerne un dispositif d'arrosage, un arroseur et un procédé d'arrosage. Elle s'applique, en particulier, à l'arrosage de terrains, par exemple agricoles ou de loisir.

Les canons à eau électriques sont reliés, par des canalisations, à une électrovanne et permettent d'asperger une grande zone de terrain par un mouvement rotatif, sous l'action d'un moteur électrique. L'électrovanne et le moteur du canon sont commandés simultanément, en ouverture comme en fermeture, par un programmateur. Cependant, ce type de dispositif d'arrosage présente plusieurs inconvénients. D'une part, lors de l'arrêt de la période d'arrosage, Le programmateur coupe l'alimentation électrique aux bornes du canon électrique et aux bornes de l'électrovanne. Le canon s'immobilise immédiatement, l'électrovanne se ferme également, mais la pression résiduelle dans les canalisations allant de l'électrovanne au canon provoque une poursuite de l'arrosage et donc un excès d'aspersion d'eau dans l'axe du canon devenu immobile. D'autre part, ces canons sont soumis à un vandalisme qui consiste à les désorienter manuellement lors d'une période d'arrosage ou en dehors de période d'arrosage, si bien que, dans le premier cas le dispositif ne peut fermer la vanne si l'arrosage se produit dans une zone différente de celle du secteur prédéterminé et dans le deuxième cas, lors de leur remise en mouvement, ils aspergent une zone de terrain inappropriée. Enfin, ils ne retournent pas à la même position à chaque arrêt d'arrosage. Aucun des documents de l'art antérieur, comme par exemple FR 2 855 369, ne décrit un canon à eau comprenant des moyens de commande adaptés, à chaque fin de période d'arrosage, à fermer ladite électrovanne et à arrêter les moyens de mise en mouvement après une temporisation prédéterminée suivant la fermeture de l'électrovanne. Ainsi, aucun document de l'art antérieur ne décrit la solution préconisée par l'invention pour résoudre le problème de l'accumulation d'eau, au point d'arrêt de la rotation du canon, quand l'arrêt de l'arrosage et de la rotation sont simultanés, à savoir un arrêt des moyens de mise en mouvement après une temporisation prédéterminée suivant la fermeture de l'électrovanne. La présente invention vise à remédier à ces inconvénients. L'objet de la présente invention est atteint par un dispositif d'arrosage, une utilisation de ce dispositif et un procédé mettant en oeuvre ce dispositif conformément aux revendications indépendantes.

A cet effet, la présente invention vise, selon un premier aspect, un dispositif d'arrosage qui comporte :
- au moins un programmateur adapté à commander les périodes de fonctionnement et/ou de mouvement d'au moins un canon à eau électrique et
- au moins un canon à eau électrique, chaque canon à eau électrique étant associé à une électrovanne et comportant des moyens de commande de ladite électrovanne associée et de commande de moyens de mise en mouvement dudit canon électrique, lesdits moyens de commande étant adaptés, particulièrement à chaque fin de période d'arrosage, à fermer ladite électrovanne et, éventuellement après une temporisation prédéterminée suivant la fermeture de l'électrovanne, à arrêter les moyens de mise en mouvement, et

- une alimentation électrique externe au canon à eau. Grâce à ces dispositions, le mouvement du canon à eau peut n'être arrêté que lorsque la pression d'eau dans les canalisations allant de l'électrovanne au canon a décru et que l'arrosage est donc interrompu. L'uniformité de l'arrosage est donc améliorée.

Un des avantages de la présente invention, basé sur le fait que le dispositif selon l'invention, peut être en permanence maintenu sous tension électrique, celui-ci peut comporter des moyens de programmation et/ou de commande apte à fonctionner indépendamment de la circulation d'eau. De plus le dispositif peut comporter des moyens qui permettent outre de commander l'arrosage en fonction de la durée d'arrosage désirée ou de la quantité d'eau d'arrosage à apporter ou de l'hygrométrie ambiante, de commander l'arrosage en fonction de la position géographique de l'arroseur. On comprend ainsi que le canon à eau peut commander en fonction du secteur d'arrosage qu'il doit arroser et du nombre de passage complet sur ledit secteur que désire voir réalisés.

Selon un premier mode de réalisation, le programmateur du dispositif selon l'invention, peut comporter, préférentiellement pour chaque canon à eau électrique, un relais relié à deux sorties de tensions du programmateur de voltage différents, dont une est la commande tout ou rien et l'autre est une tension permanente, la sortie dudit relais étant reliée audit canon à eau électrique et la commande dudit relais étant reliée à la sortie de tension de commande tout ou rien du programmateur.

Grâce à ces dispositions, une tension permanente est maintenue aux bornes du canon à eau électrique permettant de maintenir sous tension certains organes électroniques intégrés au canon à eau électrique.

Selon un deuxième mode de réalisation, au moins un canon à eau électrique du dispositif selon l'invention, peut en outre comporter un encodeur émettant des signaux représentatifs de la position et/ou des déplacements des moyens de mise en mouvement.

Grâce à ces dispositions, chaque canon à eau électrique peut déterminer sa position et, éventuellement, compenser un décalage, volontaire ou non, de sa position, par exemple en début de période d'arrosage ou lorsque par vandalisme il n'est plus orienté dans le secteur d'arrosage requis. Selon un troisième mode de réalisation, les moyens de commande du dispositif selon l'invention, peuvent être adaptés à commander le retour de l'arroseur dans une position prédéterminée, avantageusement à chaque fin de période d'arrosage ou encore après vandalisme. Grâce à ces dispositions, des zones qui ne doivent pas être arrosées, par exemple des routes, ne risquent pas d'être arrosées en début de période d'arrosage.

Selon un quatrième mode de réalisation, les moyens de commande du dispositif selon l'invention, peuvent être adaptés à mesurer et à mémoriser la durée d'une période d'arrosage et à commander la fermeture de l'électrovanne associée, éventuellement après une temporisation prédéterminée avant la fin de la période d'arrosage mémorisée. Grâce à ces dispositions, le canon à eau électrique peut être compatible avec des programmateurs de l'art antérieur qui ne fournissent, au canon à eau, qu'un signal tout ou rien pour faire arroser ou ne pas faire arroser le canon à eau électrique.

Selon un cinquième mode de réalisation, le programmateur du dispositif selon l'invention, peut être adapté pour alimenter électriquement, en permanence, chaque canon à eau électrique, les moyens de commande pouvant alors être adaptés à fermer immédiatement l'électrovanne associée lorsqu'ils reçoivent un signal de fin de période d'arrosage de la part du programmateur et à arrêter le mouvement des moyens de mise en mouvement, éventuellement après une temporisation prédéterminée suivant la fermeture de l'électrovanne associée.

Selon un sixième mode de réalisation, le programmateur du dispositif selon l'invention, peut comporter trois sorties par canon électrique, l'une des dites sorties portant une tension permanente destinée à maintenir, en permanence, l'alimentation électrique de chaque canon électrique.

Selon un septième mode de réalisation, le programmateur du dispositif selon l'invention, peut être adapté à envoyer des signaux à chaque canon à eau électrique, par courant porteur, et chaque canon à eau électrique peut comporter un moyen de décodage desdits signaux. Grâce à ces dispositions, les communications entre le programmateur et chaque canon à eau électrique peuvent être complexes et riches en information.

Selon un huitième mode de réalisation, le dispositif selon l'invention, peut comporter une télécommande adaptée à émettre des messages, avantageusement à destination de chaque canon à eau, chaque message pouvant comporter un identifiant de canon à eau, et chaque canon à eau électrique pouvant comporter des moyens de réception des signaux émis par la télécommande. Grâce à ces dispositions, une seule télécommande peut télécommander plusieurs canons à eau électriques.

Selon un neuvième mode de réalisation, chaque canon à eau électrique peut comporter au moins une entrée de signaux provenant d'un capteur.

Selon un dixième mode de réalisation, chaque canon à eau électrique peut comporter des moyens de communication avec d'autres canons à eau électriques.

Grâce à chacune de ces dispositions, un canon à eau électrique peut transmettre aux autres canons à eau électriques des valeurs captées par un capteur associé audit canon à eau et/ou commander le fonctionnement d'autres canons à eau électriques.

Bien entendu, l'Homme du métier comprend à la lecture de ce qui précède que chacun des modes de réalisation envisagé peut être adapté au dispositif selon l'invention soit de manière indépendante des autres modes de réalisation, soit en combinaison avec un ou plusieurs autres modes de réalisation.

Selon un deuxième aspect, la présente invention vise un procédé d'arrosage mettant en oeuvre un dispositif tel que décrit précédemment, comportant au moins un programmateur adapté à commander les périodes de fonctionnement et de mouvement d'au moins un canon à eau électrique et au moins un canon à eau électrique, associé à une électrovanne et comportant des moyens de commande de ladite électrovanne et de commande de moyens de mise en mouvement d'un jet d'eau issu dudit canon électrique, caractérisé en ce que ledit procédé comporte, pour chaque période d'arrosage :
- une étape de fermeture de ladite électrovanne et
- après une temporisation prédéterminée suivant ladite étape de fermeture d'électrovanne, une étape d'arrêt des moyens de mise en mouvement dudit canon à eau.

Selon un troisième aspect, un mode de réalisation vise un procédé d'arrosage non couvert par le jeu de revendications mettant en oeuvre un dispositif tel que décrit, comportant au moins un programmateur adapté à commander les périodes de fonctionnement et de mouvement d'au moins un canon à eau électrique, ledit canon à eau électrique comportant un encodeur émettant des signaux représentatifs de la position d'arrosage et/ou des déplacements des moyens de mise en mouvement, ledit canon à eau étant associé à une électrovanne et comportant des moyens de commande de ladite électrovanne et de commande de moyens de mise en mouvement dudit canon électrique, ledit procédé comportant, au cours de chaque période d'arrosage une étape de mesure de la position du canon par rapport à un secteur d'arrosage prédéterminé.

Selon un mode de réalisation de ce procédé, la mesure de la position du canon par rapport à un secteur d'arrosage prédéterminé peut être effectuée de manière discontinue, par exemple à des intervalles de temps prédéterminés, ou encore de manière continue.

Ainsi si la position détectée du canon à eau est en dehors du secteur d'arrosage prédéterminé, quelle qu'en soit la cause, alors les moyens de commandes de l'électrovanne peuvent être adaptés pour interrompre instantanément l'arrosage et les moyens de commande de mise en mouvement du canon à eau. Selon encore une variante, lesdits moyens de commande de mise en mouvement du canon à eau peuvent remettre celui-ci dans une position conforme au secteur d'arrosage prédéterminé.

Les avantages de ces procédés d'arrosage étant similaires à ceux du dispositif d'arrosage tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif, en regard des dessins annexés dans lesquels :
- la figure 1 représente, schématiquement, un premier mode de réalisation d'un dispositif d'arrosage objet de la présente invention,
- la figure 2 représente, schématiquement, un deuxième mode de réalisation d'un dispositif d'arrosage objet de la présente invention,
- la figure 3 représente, schématiquement, un troisième mode de réalisation d'un dispositif d'arrosage objet de la présente invention,
- les figures 4 et 5 représentent des détails du dispositif d'arrosage illustré en figure 3, à différents moments,
- la figure 6 représente, schématiquement, un quatrième mode de réalisation d'un dispositif d'arrosage objet de la présente invention et
- la figure 7 représente, schématiquement, un cinquième mode de réalisation d'un dispositif d'arrosage objet de la présente invention.

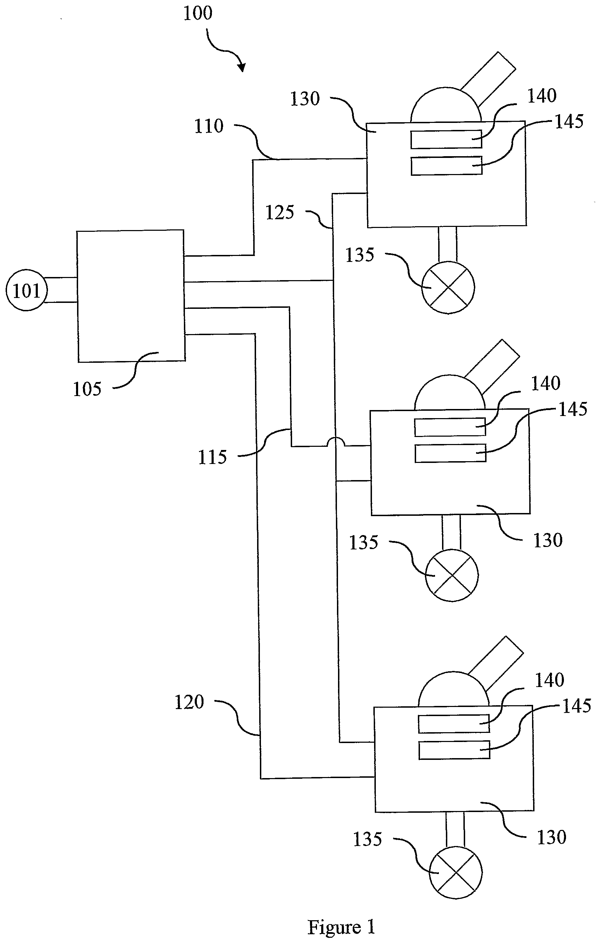

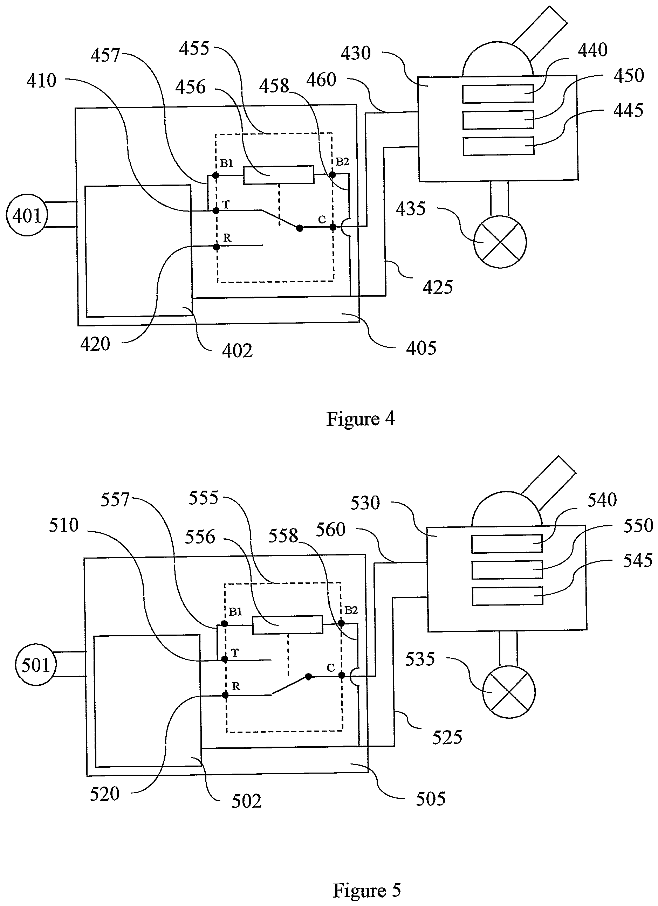

Dans les modes de réalisation illustrés dans les figures 1 à 7, on n'a représenté que un (figures 4 et 5), deux ou trois canons à eau, dans un but de clarté des figures. Cependant, la présente invention ne se limite pas à ces nombres de canons à eau.

On observe, en figure 1, un premier mode de réalisation de l'invention représentant un dispositif d'arrosage 100 comportant un programmateur 105 relié, par des liaisons électriques 110, 115, 120 et 125, à des canons à eau électriques 130 associés respectivement à des électrovannes 135 et comportant respectivement, des circuits électroniques 140, des moteurs électriques 145, et une alimentation électrique externe 101.

Le programmateur 105 est de type connu. Il comporte deux types de sortie :
- 1 sortie correspondant à la masse (ou commun) 125 reliée à tous les canons associés ;
- des sorties de type "tout ou rien" 110, 115 et 120, chacune reliée indépendamment à un canon.

Ledit programmateur est adapté à être programmé, manuellement, par l'intermédiaire d'un clavier et d'une interface utilisateur, ou par un système informatique, par l'intermédiaire d'une mémoire amovible ou d'une liaison filaire ou non.

Les liaisons électriques 110, 115 et 120 sont adaptées à véhiculer des signaux de commande à destination, respectivement, des circuits électroniques 140. Dans des modes de réalisation particuliers, compatibles avec des programmateurs de l'art antérieur, les signaux de commande sont en tout ou rien, c'est-à-dire présente une tension par exemple de 24 Volts, pendant les périodes d'arrosage et aucune tension en dehors des périodes d'arrosage. La liaison électrique 125 est le commun des circuits du programmateur 105 et des circuits électroniques 140.

Les électrovannes 135 sont de type connu et sont adaptées à s'ouvrir ou se fermer sous la commande des circuits électroniques 140, respectivement.

Les moteurs électriques 145 sont de type connu et sont adaptés à modifier la direction des jets d'eau issus des canons à eau électriques pour arroser successivement différentes parties d'un terrain. On observe que le nombre de moteurs électriques par canon à eau n'est pas limité à un et peut, avantageusement, être de deux, pour pouvoir modifier, indépendamment, l'orientation du jet d'eau dans un plan parallèle à celui du terrain et l'angle d'inclinaison de ce jet d'eau par rapport au plan du terrain. En outre, un moteur électrique peut être prévu pour briser le jet d'eau. Pour chaque canon, les moteurs électriques constituent ainsi des moyens de mise en mouvement du jet d'eau issu du canon électrique considéré.

Les circuits électroniques 140 constituent des moyens de commande de l'électrovanne associée et des moyens de mise en mouvement canon électrique correspondant et sont adaptés, à chaque fin de période d'arrosage, à fermer ladite électrovanne et, après une temporisation prédéterminée suivant la fermeture de l'électrovanne, à arrêter les moyens de mise en mouvement afin que le mouvement se poursuive pendant la décroissance de la pression d'eau à l'entrée du canon à eau électrique considéré.

L'alimentation électrique externe 101 peut être par exemple le secteur EDF 230V ou un accumulateur ou une pile électrique ou toute source électrique à tension alternative ou tension continue ou tout dispositif autonome de type panneau solaire ou autres.

Dans le mode de réalisation illustré en figure 1, le circuit électronique de chaque canon à eau comporte une mémoire non volatile et n'est alimenté, par le programmateur, que pendant les durées d'arrosage. Pour pouvoir fermer l'électrovanne avant la fin d'une période d'arrosage, il est prévu :
- que chaque période d'arrosage soit chronométrée, par le biais d'un compteur incrémenté et mémorisé tant que le canon à eau est alimenté en électricité,
- que la durée déjà écoulée de la période d'arrosage en cours soit comparée à la durée de la période d'arrosage précédente et
- que lorsque la différence entre ces deux durées équivaut à la temporisation prédéterminée, l'électrovanne soit fermée.

Ainsi, la mémoire conserve, après la fin d'une période d'arrosage, la durée de cette période. Pendant la période d'arrosage suivante l'électrovanne est commandée en fermeture lorsque la différence entre ces deux valeurs est inférieure à une valeur prédéterminée correspondant à la temporisation prédéterminée, correspondant, elle-même, à la durée de décroissance de la pression d'eau à partir de la fermeture de l'électrovanne. On évite ainsi le risque de constitution de flaque, particulièrement gênant dans les applications d'arrosage des terrains de sport.

En variante, notamment adaptée aux applications agricoles, lorsque la durée écoulée de la période d'arrosage en cours devient supérieure à la durée d'arrosage précédente, par exemple de dix secondes, l'électrovanne est commandée en ouverture afin de reprendre l'arrosage. On peut ainsi gérer des allongements de durée de périodes d'arrosage successives.

On observe que la durée de décroissance, ou temporisation prédéterminée, est fournie à chaque circuit électronique d'un canon électrique par des moyens externes (télécommande ou connecteur, par exemple), par programmation initiale ou par un moyen intégré audit canon (clavier associé à un afficheur, par exemple).

Ce premier mode de réalisation résout le problème d'excès d'aspersion de zones de terrain lors de l'arrêt du canon mais n'est pas adaptée à résoudre le problème du vandalisme qui pourrait faire arroser, par le canon à eau, des zones de terrain non appropriées.

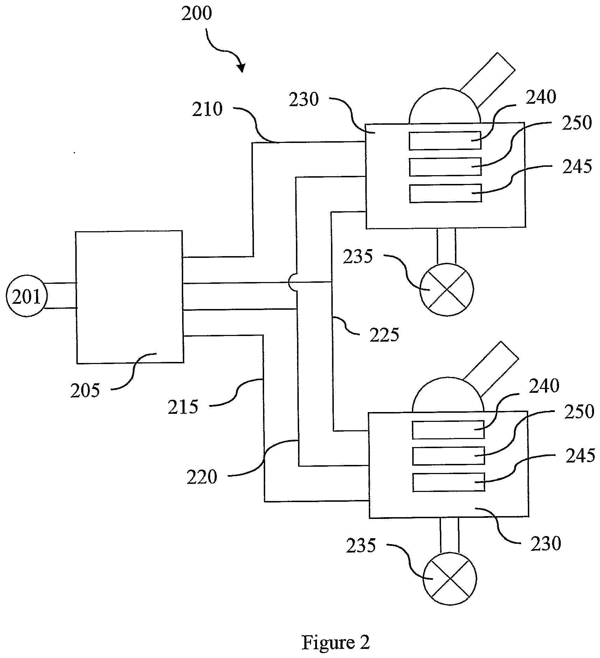

On observe, en figure 2, un second mode de réalisation de l'invention représentant un dispositif d'arrosage 200 comportant un programmateur 205 relié, par des liaisons électriques 210, 215, 220 et 225, à des canons à eau électriques 230 associés respectivement à des électrovannes 235 et comportant respectivement, des circuits électroniques 240, des moteurs électriques 245, et une alimentation électrique externe 201.

Le programmateur 205 présente trois types de sorties :
- 1 sortie correspondant à la masse (ou commun) 225, reliée à tous les canons associés ;
- 1 sortie correspondant à une alimentation en tension permanente 220, reliée à tous les canons associés ;
- des sorties de type "tout ou rien" 210, 215, chacune reliée indépendamment à un canon.

Selon cette disposition les canons électriques de ce dispositif sont en permanence sous tension.

Le programmateur 205 est adapté à être programmé, manuellement, par l'intermédiaire d'un clavier et d'une interface utilisateur, ou par un système informatique, par l'intermédiaire d'une mémoire amovible ou d'une liaison filaire ou non.

Les liaisons électriques 210 et 215 sont adaptées à véhiculer des signaux de commande tout ou rien à destination, respectivement, des canons à eau électriques 230. En variante, ces liaisons électriques sont remplacées par des liaisons sans fil. La liaison électrique 220 véhicule une tension d'alimentation permanente des circuits électroniques 240 différente de celle des liaisons électriques 210 et 215. La liaison électrique 215 est le commun des circuits électroniques 240 et du programmateur 205.

Les électrovannes 235 sont de type connu et sont adaptées à s'ouvrir ou se fermer sous la commande des circuits électroniques 240, respectivement.

Les moteurs électriques 245 sont de type connu et sont adaptés à modifier la direction des jets d'eau issus des canons à eau électriques pour arroser successivement différentes parties d'un terrain. On observe que le nombre de moteurs électriques par canon à eau n'est pas limité à un et peut, avantageusement, être de deux, pour pouvoir modifier, indépendamment, l'orientation du jet d'eau dans un plan parallèle à celui du terrain et l'angle d'inclinaison de ce jet d'eau par rapport au plan du terrain. En outre, un moteur électrique peut être prévu pour briser le jet d'eau. Pour chaque canon, les moteurs électriques constituent ainsi des moyens de mise en mouvement du jet d'eau issu du canon électrique considéré.

Les circuits électroniques 240 constituent des moyens de commande de l'électrovanne associée et des moyens de mise en mouvement du canon électrique correspondant et sont adaptés, avantageusement à chaque fin de période d'arrosage, à fermer ladite électrovanne et, après une durée prédéterminée suivant la fermeture de l'électrovanne, à arrêter les moyens de mise en mouvement, afin que le mouvement se poursuive pendant la décroissance de la pression d'eau à l'entrée du canon à eau électrique considéré.

Dans cette configuration, dès qu'un circuit électronique 240 reçoit une consigne d'arrêt d'arrosage, par exemple en fin de période d'arrosage, il peut commander la fermeture de l'électrovanne et peut attendre, pendant une durée prédéterminée correspondant à la durée de décroissance de la pression en entrée du canon à eau électrique considéré, avant de commander l'arrêt du ou des moteur(s) du canon à eau électrique. Ainsi dans cette configuration le dispositif selon l'invention est adapté pour éviter la constitution de flaques d'eau.

Préférentiellement, le circuit électronique commande l'arrêt du ou des moteurs(s) dans une position prédéterminée toujours identique (appelée position « parking »).

Avantageusement, chaque canon électrique peut comporter en outre un encodeur de position 250, intégré, ou non, au moteur électrique correspondant. L'encodeur de position 250 peut émettre des signaux représentatifs de la position et/ou des déplacements des moyens de mise en mouvement dudit canon à eau. De cette manière, dès qu'un circuit électronique reçoit une consigne d'arrêt d'arrosage, par exemple après qu'un capteur de position d'arrosage ait identifié une position d'arrosage erronée (vandalisme, accident) par rapport au secteur d'arrosage prédéterminé, il peut commander la fermeture immédiate de l'électrovanne, interrompant ainsi l'arrosage. En outre, il est possible d'associer à cette commande d'arrêt d'arrosage, une commande de mise en mouvement dudit canon à eau afin de le repositionner dans une position compatible avec le secteur d'arrosage prédéterminé.

L'alimentation électrique externe 201 peut être par exemple le secteur EDF 230V ou un accumulateur ou une pile électrique ou toute source électrique à tension alternative ou tension continue ou tout dispositif autonome de type panneau solaire ou autres.

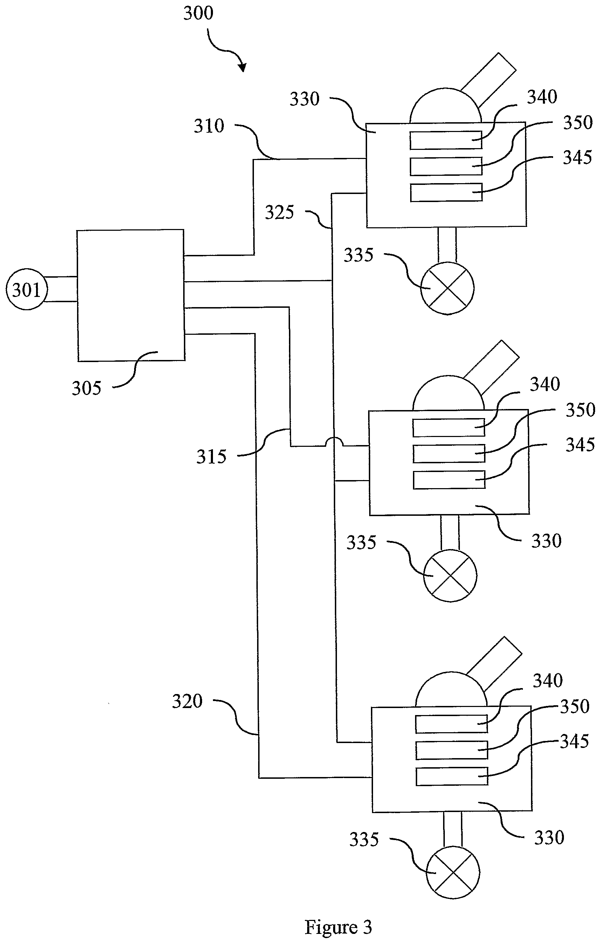

On observe, en figure 3, un troisième mode de réalisation de l'invention représentant un dispositif identique à celui de la figure 1 mais comportant en plus un encodeur de position 350. Ainsi la figure 3 représente un dispositif d'arrosage 300 comportant un programmateur 305 relié, par des liaisons électriques 310, 315, 320 et 325, à des canons à eau électriques 330, associés respectivement à des électrovannes 335 et comportant respectivement, des circuits électroniques 340, des moteurs électriques 345, et une alimentation électrique externe 301, et un encodeur de position 350.

Le programmateur 305 est adapté à être programmé, manuellement, par l'intermédiaire d'un clavier et d'une interface utilisateur, ou par un système informatique, par l'intermédiaire d'une mémoire amovible ou d'une liaison filaire ou non.

Les liaisons électriques 310, 315 et 320 sont adaptées à véhiculer des signaux de commande à destination, respectivement, des circuits électroniques 340. Dans des modes de réalisation particuliers, les signaux de commande ne présentent que deux niveaux, c'est-à-dire présente une tension, par exemple de 24 Volts, pendant les périodes d'arrosage et une autre tension différente de la première, par exemple de 12 Volts, permanente en dehors des périodes d'arrosage. A cet effet, le programmateur 305 comporte un dispositif de commutation électronique et ou électromécanique, par exemple, des relais. La liaison électrique 325 est le commun des circuits du programmateur 305 et des circuits électroniques 340. Selon cette disposition les canons électriques de ce dispositif sont en permanence sous tension.

Les électrovannes 335 sont de type connu et sont adaptées à s'ouvrir ou se fermer sous la commande des circuits électroniques 340, respectivement.

Les moteurs électriques 345 sont de type connu et sont adaptés à modifier la direction des jets d'eau issus des canons à eau électriques pour arroser successivement différentes parties d'un terrain. On observe que le nombre de moteurs électriques par canon à eau n'est pas limité à un et peut, avantageusement, être de deux, pour pouvoir modifier, indépendamment, l'orientation du jet d'eau dans un plan parallèle à celui du terrain et l'angle d'inclinaison de ce jet d'eau par rapport au plan du terrain. En outre, un moteur électrique peut être prévu pour briser le jet d'eau. Pour chaque canon, les moteurs électriques constituent ainsi des moyens de mise en mouvement du jet d'eau issu du canon électrique considéré.

Les circuits électroniques 340 constituent des moyens de commande de l'électrovanne associée et des moyens de mise en mouvement du canon électrique correspondant et sont adaptés, particulièrement à chaque fin de période d'arrosage, à fermer ladite électrovanne. Ainsi, en fin de période d'arrosage, après une temporisation prédéterminée suivant la fermeture de l'électrovanne, lesdits circuits électroniques sont adaptés à arrêter les moyens de mise en mouvement, afin que ledit mouvement se poursuive pendant la décroissance de la pression d'eau à l'entrée du canon à eau électrique considéré.

L'alimentation électrique externe 301 peut être par exemple le secteur EDF 230V ou un accumulateur ou une pile électrique ou toute source électrique à tension alternative ou tension continue ou tout dispositif autonome de type panneau solaire ou autres.

On observe que la durée de décroissance, ou temporisation prédéterminée, est fournie à chaque circuit électronique d'un canon électrique par des moyens externes (télécommande ou connecteur, par exemple), par programmation initiale ou par un moyen intégré audit canon (clavier associé à un afficheur, par exemple).

Préférentiellement, le circuit électronique commande l'arrêt du ou des moteurs(s) dans une position prédéterminée toujours identique (appelée position « parking »).

Avantageusement et toujours dans le mode de réalisation illustré en figure 3, chaque canon électrique peut en outre comporter un encodeur de position 350, intégré, ou non, au moteur électrique correspondant. L'encodeur de position 350 émet des signaux représentatifs de la position et/ou des déplacements des moyens de mise en mouvement du canon à eau. De cette manière, lorsqu'une position d'arrosage erronée est déterminée (vandalisme, accident) lesdits circuits électroniques 340 sont adaptés à arrêter immédiatement, sans temporisation l'arrosage, par commande de fermeture de l'électrovanne, et éventuellement à commander les moyens de mise en mouvement afin de remettre le canon à eau dans une position d'arrosage conforme au secteur d'arrosage prédéterminé.

Dans les modes de réalisation illustrés en figure 3, le circuit électronique de chaque canon à eau ouvre l'électrovanne associée lorsqu'il reçoit un signal, par exemple une tension de 24 Volts, et ferme l'électrovanne lorsqu'il reçoit un signal de tension différente et permanente, par exemple une tension de 12 Volts. En fin de cycle d'arrosage, lorsqu'il ferme l'électrovanne qui lui est associée, le circuit électronique peut éventuellement maintenir la commande de rotation des moyens de mise en mouvement du canon à eau électrique pendant une temporisation prédéterminée correspondant à la durée de décroissance de la pression d'eau en entrée de ce canon à eau électrique grâce à la tension différente et permanente. En cours d'arrosage, quand une position d'arrosage erronée a été déterminée, le circuit électronique,, peut interrompre immédiatement la rotation des moyens de mise en mouvement du canon à eau électrique, sans temporisation.

On observe que la durée de décroissance, ou temporisation prédéterminée, est fournie à chaque circuit électronique d'un canon électrique par des moyens externes (télécommande ou connecteur, par exemple), par programmation initiale ou par un moyen intégré audit canon (clavier associé à un afficheur, par exemple).

Les figures 4 et 5 représentent des modes de réalisation particuliers du troisième mode de réalisation du dispositif objet de la présente invention.

Comme illustré en figure 4 le programmateur 405 présente deux types de sortie :
- 1 sortie correspondant à la masse (ou commun), 425, reliée au canon associé, éventuellement à tous les canons associés ;
- 1 sortie, 460, toujours en tension, reliée indépendamment à chaque canon et pouvant alternativement véhiculer des tensions de commande différentes, selon qu'elle est reliée aux sorties 410 ou 420 du programmateur 402.

Ledit programmateur 405 est composé d'un programmateur 402 de type connu qui comporte trois types de sortie :
- 1 sortie correspondant à la masse (ou commun) 425, reliée à tous les canons associés ;
- 1 sortie en tension permanente 420 ;
- une sortie de type "tout ou rien" 410.

On retrouve dans cette figure 4 des liaisons électriques 410, 420, 425 et 460, un canon à eau électriques 430, associé à une électrovanne 435 et comportant un circuit électronique 440, un moteur électrique 445, un encodeur de position 450 et une alimentation électrique externe 401.

Pour chaque canon à eau électrique, le programmateur 405 comporte un dispositif de commutation électronique et ou électromécanique par exemple un relais 455, de type « 1RT », c'est-à-dire avec contact au repos, dont la commande 456 est reliée d'une part à la sortie "tout ou rien" 410 du programmateur 402 par la liaison 457 et d'autre part au commun 425 du programmateur 402 par la liaison 458. Les contacts T et R dudit relai sont respectivement reliés aux sorties 410 et 420 du programmateur 402. Lors d'une période d'arrosage, la sortie 410 véhicule une tension donnée, par exemple 24 Volts, qui se retrouve en entrée 457 du relais 455 ainsi qu'à la borne T, donc sur la liaison 460 qui alimente le canon.

De même, comme illustré en figure 5, lorsque le programmateur 502 veut arrêter l'aspersion d'eau par ce canon électrique, il arrête de fournir le signal à la sortie 510, ce qui a pour effet de faire commuter le relais 555 sur l'autre sortie 520 du programmateur 502, et ce signal de tension différente de celle de la sortie 510, se retrouve en entrée du circuit électronique du canon à eau correspondant. On retrouve dans cette figure 5 des liaisons électriques 510, 520,525 et 560, un canon à eau électrique 530, associé à une électrovanne 535 et comportant un circuit électronique 540, un moteur électrique 545, un encodeur de position 550, et une alimentation électrique externe 501.

Dans ces deux dispositions la tension désirée en sortie 420 ou 520 du programmateur 402 ou 502 peut être, directement à la sortie du programmateur 402 ou 502, adaptée à la tension désirée, ou par modification de la tension en sortie 420 ou 520 du programmateur 402 ou 502, par ajout de tout moyen de conversion de la tension comme par exemple une simple diode en série dans le cas ou la tension délivrée sur les sorties 420 et 520 serait une tension alternative.

De même dans ces deux dispositions, l'alimentation électrique externe 401 ou 501 peut être par exemple le secteur EDF 230V ou un accumulateur ou une pile électrique ou toute source électrique à tension alternative ou tension continue ou tout dispositif autonome de type panneau solaire ou autres.

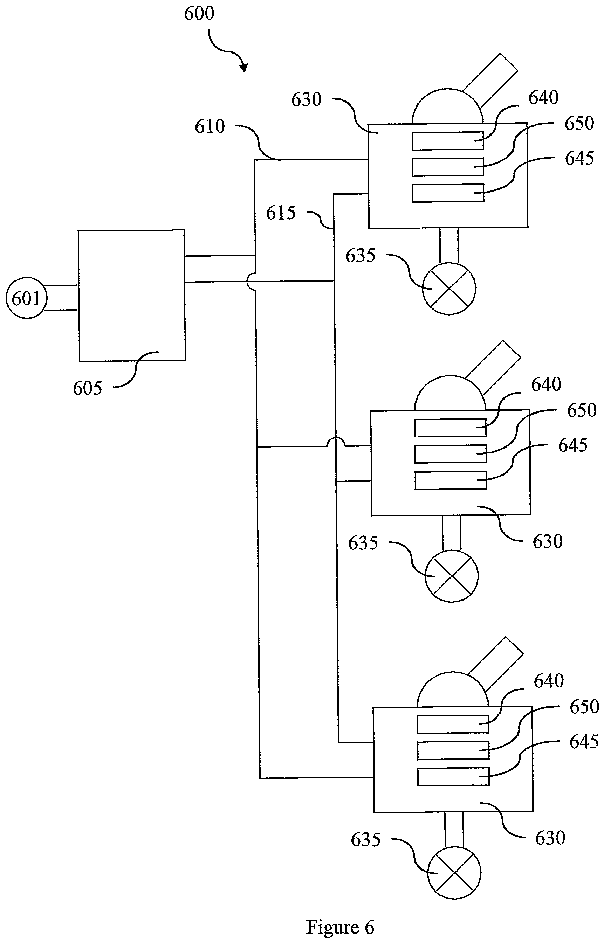

On observe, en figure 6, un dispositif d'arrosage 600 comportant un programmateur 605 relié, par des liaisons électriques 610 et 615, à des canons à eau électriques 630 associés respectivement à des électrovannes 635 et comportant respectivement, des circuits électroniques 640, des moteurs électriques 645 et une alimentation électrique externe 601.

Le programmateur 605 est de type connu. Il est adapté à être programmé manuellement, par l'intermédiaire d'un clavier et d'une interface utilisateur, ou par un système informatique, par l'intermédiaire d'une mémoire amovible ou d'une liaison filaire ou non.

Le programmateur est adapté à maintenir une tension permanente aux bornes des canons électriques et à véhiculer des signaux de commande par courant porteur.

Selon cette disposition les canons électriques de ce dispositif sont en permanence sous tension.

La liaison électrique 610 est adaptée à véhiculer des signaux de commande, à courant porteur, à destination des circuits électroniques 640. La liaison électrique 615 est le commun des circuits du programmateur 605 et des circuits électroniques 640.

Les électrovannes 635 sont de type connu et sont adaptées à s'ouvrir ou se fermer sous la commande des circuits électroniques 640, respectivement.

Les moteurs électriques 645 sont de type connu et sont adaptés à modifier la direction des jets d'eau issus des canons à eau électriques pour arroser successivement différentes parties d'un terrain. On observe que le nombre de moteurs électriques par canon à eau n'est pas limité à un et peut, avantageusement, être de deux, pour pouvoir modifier, indépendamment, l'orientation du jet d'eau dans un plan parallèle à celui du terrain et l'angle d'inclinaison de ce jet d'eau par rapport au plan du terrain. En outre, un moteur électrique peut être prévu pour briser le jet d'eau. Pour chaque canon, les moteurs électriques constituent ainsi des moyens de mise en mouvement du jet d'eau issu du canon électrique considéré.

Les circuits électroniques 640 constituent des moyens de commande de l'électrovanne associée et des moyens de mise en mouvement du canon électrique correspondant et sont adaptés, particulièrement à chaque fin de période d'arrosage, à fermer ladite électrovanne. Selon un mode de réalisation particulier, en fin de cycle d'arrosage après une temporisation prédéterminée suivant la fermeture de l'électrovanne, lesdits circuits électroniques sont aptes à arrêter les moyens de mise en mouvement, afin que le mouvement se poursuive pendant la décroissance de la pression d'eau à l'entrée du canon à eau électrique considéré.

L'alimentation électrique externe 601 peut être par exemple le secteur EDF 230V ou un accumulateur ou une pile électrique ou toute source électrique à tension alternative ou tension continue ou tout dispositif autonome de type panneau solaire ou autres.

Dans le mode de réalisation illustré en figure 6, le programmateur 605 est adapté à émettre des consignes d'arrosage sous la forme de signaux à courant porteur, ces consignes pouvant comporter, chacune, l'identifiant d'au moins un des circuits électroniques 640. Réciproquement, le circuit électronique de chaque canon à eau comporte un décodeur de signaux encodés par le programmateur 605.

En fin de cycle d'arrosage, lorsqu'un de ces circuits électroniques 640 commande la fermeture de l'électrovanne qui lui est associée, ce circuit électronique peut poursuivre la commande de rotation des moyens de mise en mouvement du canon à eau électrique pendant une durée prédéterminée correspondant à la durée de décroissance de la pression d'eau en entrée de ce canon à eau électrique. Préférentiellement, le circuit électronique commande l'arrêt du ou des moteurs(s) dans une position prédéterminée toujours identique (appelée position « parking »).

On observe que la durée de décroissance, ou temporisation prédéterminée, est fournie à chaque circuit électronique d'un canon électrique par des moyens externes (télécommande ou connecteur, par exemple), par programmation initiale ou par un moyen intégré audit canon (clavier associé à un afficheur, par exemple).

Avantageusement et toujours dans le mode de réalisation illustré en figure 6, chaque canon électrique peut en outre comporter un encodeur de position 650, intégré, ou non, au moteur électrique correspondant. L'encodeur de position 650 émet des signaux représentatifs de la position et/ou des déplacements des moyens de mise en mouvement du canon à eau. De cette manière, lorsqu'une position d'arrosage erronée est déterminée (vandalisme, accident) lesdits circuits électroniques 640 sont adaptés à arrêter immédiatement, sans temporisation l'arrosage, par commande de fermeture de l'électrovanne, et éventuellement à commander les moyens de mise en mouvement afin de remettre le canon à eau dans une position d'arrosage conforme au secteur d'arrosage prédéterminé.

En variante, le programmateur 605 est adapté à fournir au moins neuf types de consigne : « début de mouvement », « ouverture d'électrovanne », « fin de mouvement », « fermeture d'électrovanne », « retour en position parking », « réglage butée gauche », « réglage butée droite », « réglage position parking » et « réglage vitesse ». Dans ce cas, les circuits électroniques des canons à eau électriques n'ont pas à connaître les durées de décroissance de pression.

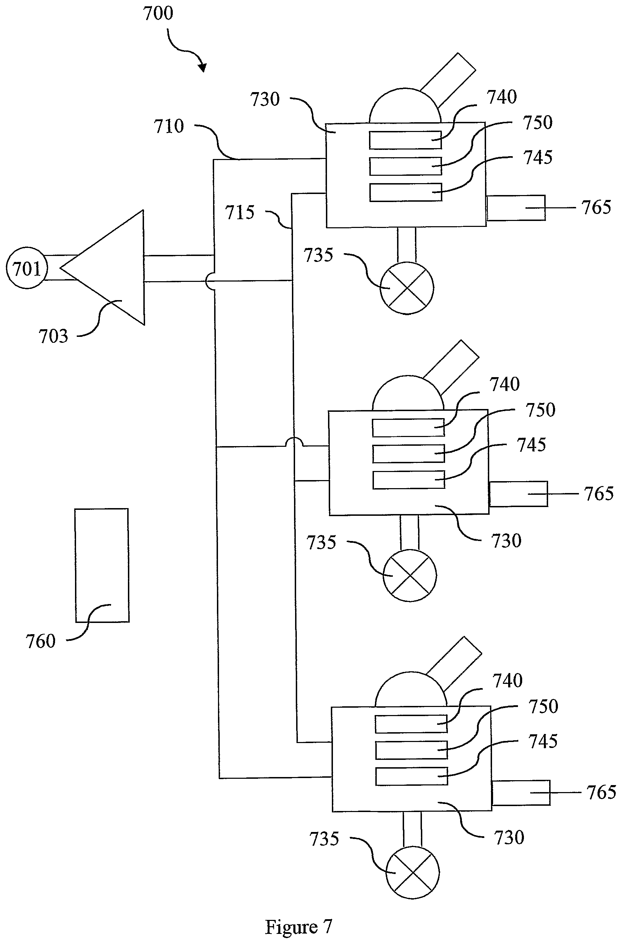

On observe, en figure 7, un dispositif d'arrosage 700 comportant une télécommande 760, une alimentation électrique externe 701, un adaptateur de tension 703 relié, par des liaisons électriques 710 et 715, à des canons à eau électriques 730 associés respectivement à des électrovannes 735 et comportant respectivement, des circuits électroniques 740, pouvant au moins mémoriser les commandes envoyées par la télécommande 760, des moteurs électriques 745. Selon cette disposition les canons électriques de ce dispositif sont en permanence sous tension.

L'alimentation électrique externe 701 peut être par exemple le secteur EDF 230V ou un accumulateur ou une pile électrique ou toute source électrique à tension alternative ou tension continue ou tout dispositif autonome de type panneau solaire ou autres.

L'adaptateur de tension 703 est de type connu, par exemple un transformateur. Il est adapté à fournir une tension permanente aux circuits électroniques, par exemple une tension de 24 Volts, par l'intermédiaire des liaisons électriques 710 et 715.

Les électrovannes 735 sont de type connu et sont adaptées à s'ouvrir ou se fermer sous la commande des circuits électroniques 740, respectivement.

Les moteurs électriques 745 sont de type connu et sont adaptés à modifier la direction des jets d'eau issus des canons à eau électriques pour arroser successivement différentes parties d'un terrain. On observe que le nombre de moteurs électriques par canon à eau n'est pas limité à un et peut, avantageusement, être de deux, pour pouvoir modifier, indépendamment, l'orientation du jet d'eau dans un plan parallèle à celui du terrain et l'angle d'inclinaison de ce jet d'eau par rapport au plan du terrain. En outre, un moteur électrique peut être prévu pour briser le jet d'eau. Pour chaque canon, les moteurs électriques constituent ainsi des moyens de mise en mouvement du jet d'eau issu du canon électrique considéré.

Les circuits électroniques 740 constituent en outre des moyens de commande de l'électrovanne associée et des moyens de mise en mouvement du jet d'eau issu du canon électrique correspondant et sont adaptés, avantageusement à chaque fin de période d'arrosage, à fermer ladite électrovanne et, éventuellement après une temporisation prédéterminée suivant la fermeture de l'électrovanne, à arrêter les moyens de mise en mouvement, afin que le mouvement se poursuive pendant la décroissance de la pression d'eau à l'entrée du canon à eau électrique considéré.

Dans le mode de réalisation illustré en figure 7, dans lequel le programmateur est intégré aux circuits électroniques 740, lesdits circuits électroniques comportent des récepteurs de messages de télécommande provenant de la télécommande 760, chaque message comportant un identifiant de canon à eau électrique auquel le signal est destiné.

Lorsqu'un de ces circuits électroniques 740 commande la fermeture de l'électrovanne qui lui est associée, ce circuit électronique peut poursuivre la commande de rotation des moyens de mise en mouvement du canon à eau électrique pendant une temporisation prédéterminée correspondant à la durée de décroissance de la pression d'eau en entrée de ce canon à eau électrique. Préférentiellement, le circuit électronique commande l'arrêt du ou des moteurs(s) dans une position prédéterminée toujours identique (appelée position « parking »).

Avantageusement et toujours dans le mode de réalisation illustré en figure 7, chaque canon électrique peut en outre comporter un encodeur de position 750, intégré, ou non, au moteur électrique correspondant. L'encodeur de position 750 émet des signaux représentatifs de la position et/ou des déplacements des moyens de mise en mouvement du canon à eau. De cette manière, lorsqu'une position d'arrosage erronée (vandalisme, accident) est détectée par les signaux émis par l'encodeur de position 750 lesdits circuits électroniques 750 sont adaptés à arrêter immédiatement, sans temporisation l'arrosage, par commande de fermeture de l'électrovanne, et éventuellement à commander les moyens de mise en mouvement afin de remettre le canon à eau dans une position d'arrosage conforme au secteur d'arrosage prédéterminé.

Par exemple, la télécommande 760 peut être adaptée à fournir au moins neuf types de consigne : « début de mouvement », « ouverture d'électrovanne », « fin de mouvement », « fermeture d'électrovanne », « retour en position parking », « réglage butée gauche », « réglage butée droite », « réglage position parking » et « réglage vitesse », à destination de chaque canon à eau, chaque message comportant un identifiant de canon à eau électrique. Dans ce cas, les circuits électroniques des canons à eau électriques n'ont pas à connaître les durées de décroissance de pression.

Préférentiellement, la télécommande charge un programme de fonctionnement dans une mémoire non volatile dans le circuit électronique 740 de chaque canon électrique.

Dans la télécommande 760, on réalise au moins et simultanément ou non :
- une déclaration de terrain, afin que la télécommande puisse gérer plusieurs terrains,
- une déclaration de chaque canon à eau électrique, comportant un identifiant unique pour chaque canon,
- une déclaration d'association, ou non, d'un capteur 765 associé à chaque canon à eau électrique,
- une affectation de chaque canon à eau électrique à un terrain,
- une programmation pour un terrain (éventuellement par déclaration de type de culture et de type de climat, utilisés avec des abaques prenant en compte le mois courant),
- le téléchargement d'un programme d'arrosage dans chaque canon à eau électrique.

Chaque circuit électronique d'un canon à eau électrique étant pourvu des moyens d'un programmateur, il exécute le programme d'irrigation, au cours du temps.

Dans chaque mode de réalisation de la présente invention dans lequel les canons électriques peuvent émettre des signaux, par exemple à destination d'un programmateur ou d'une télécommande, préférentiellement, on prévoit, pour chaque circuit électronique d'un canon électrique, au moins une entrée à laquelle peut être relié au moins un capteur, 765 en figure 7, de telle manière que ce circuit électronique puisse transmettre des données issues de ce capteur. Le programmateur ou la télécommande tient alors compte de ces signaux de capteurs pour déterminer les programmes d'arrosage.

Dans des variantes, chaque circuit électronique d'un canon électrique émet à destination des autres canons, des signaux issus du capteur, 765 en figure 7, qui lui est associé ou des signaux de programmation d'arrosage. Ainsi, on prévoit que différents capteurs 765 soient associés à différents canons électriques et que l'ensemble des canons bénéficient des informations issues de chacun de ces capteurs 765, par exemple de pluie, de gel, de vent, ou un interrupteur à clé. Chaque canon à eau électrique muni d'un capteur 765 peut donner l'ordre d'arrêter l'arrosage, par radio ou par courant porteur, à tous les autres canons à eau électriques. Dans le cas où l'un des canons est muni d'un interrupteur à clé, une fois ce dernier actionné par un utilisateur, le canon concerné déclenche le fonctionnement immédiat d'un cycle d'arrosage en synchronisant séquentiellement tous les canons à eau électriques.

## Revendications

1. Dispositif d'arrosage (100, 200, 300, 600, 700) comportant :
- un programmateur (105, 205, 305, 405, 605, 705) adapté à commander les périodes de fonctionnement et de mouvement d'au moins un canon à eau électrique (130, 230, 330, 430, 530, 630, 730) et
- au moins un canon à eau électrique (130, 230, 330, 430, 530, 630, 730) chaque canon à eau électrique étant associé à une électrovanne (135, 235, 335, 435, 535, 635, 735) et comportant des moyens de commande de ladite électrovanne (140, 240, 340, 440, 540, 640, 740) et de commande de moyens de mise en mouvement (145, 245, 345, 445, 545, 645, 745) dudit canon électrique (130, 230, 330, 430, 530, 630, 730), et
- une alimentation électrique externe (101, 201, 301, 401, 501, 601, 701) au canon à eau,
**caractérisé en ce que** lesdits moyens de commande (140, 240, 340, 440, 540, 640, 740) sont adaptés, à chaque fin de période d'arrosage, à fermer ladite électrovanne (135, 235, 335, 435, 535, 635, 735) et à arrêter les moyens de mise en mouvement (145, 245, 345, 445, 545, 645, 745) après une temporisation prédéterminée suivant la fermeture de l'électrovanne.

2. Dispositif d'arrosage (100, 200, 300, 600, 700) selon la revendication 1, **caractérisé en ce que** lesdits moyens de commande (140, 240, 340, 440, 540, 640, 740) sont adaptés à ouvrir ou fermer ladite électrovanne (135, 235, 335, 435, 535, 635, 735) et/ou à actionner ou arrêter les moyens de mise en mouvement (145, 245, 345, 445, 545, 645, 745).

3. Dispositif d'arrosage selon l'une quelconque des revendications 1 ou 2, **caractérisé en ce que** lesdits moyens de commande (140, 240, 340, 440, 540, 640, 740) sont adaptés à fermer ladite électrovanne (135, 235, 335, 435, 535, 635, 735) et à arrêter les moyens de mise en mouvement (145, 245, 345, 445, 545, 645, 745).

4. Dispositif selon l'une quelconque des revendications 1 à 3, **caractérisé en ce que** le programmateur (105, 205, 305, 405, 605) selon l'invention comporte, pour chaque canon à eau électrique, un programmateur (105, 205, 305, 405, 605), un dispositif de commutation électronique et ou électromécanique (455, 555) comme par exemple un relais relié à deux sorties de tensions de voltage différents, dont une est la commande tout ou rien (410, 510) et l'autre (425, 525) est une tension permanente, la sortie dudit dispositif de commutation électronique et ou électromécanique - étant reliée audit canon à eau électrique et la commande dudit dispositif de commutation électronique et ou électromécanique étant reliée à la sortie de tension de commande tout ou rien du programmateur.

5. Dispositif selon l'une quelconque des revendications 1 à 4, **caractérisé en ce qu'**au moins un canon à eau électrique comporte un encodeur (250, 350, 450, 550, 650, 750) émettant des signaux représentatifs de la position et/ou des déplacements des moyens de mise en mouvement.

6. Dispositif selon l'une quelconque des revendications 1 à 5, **caractérisé en ce que** les moyens de commande (140, 240, 340, 440, 540, 640, 740) sont adaptés à commander le retour de l'arroseur dans une position prédéterminée.

7. Dispositif selon l'une quelconque des revendications 1 à 5, **caractérisé en ce que** les moyens de commande (140, 240, 340, 440, 540, 640, 740) sont adaptés à commander le retour de l'arroseur dans une position prédéterminée, à chaque fin de période d'arrosage.

8. Dispositif selon l'une quelconque des revendications 1 à 7, **caractérisé en ce que** les moyens de commande (140, 240, 340, 440, 540, 640, 740) sont adaptés à mesurer et à mémoriser la durée d'une période d'arrosage et à commander la fermeture de l'électrovanne associée après une temporisation prédéterminée avant la fin de la période d'arrosage mémorisée.

9. Dispositif selon l'une quelconque des revendications 1 à 8, **caractérisé en ce que** le programmateur (105, 205, 305, 405, 605) est adapté à alimenter électriquement, en permanence, chaque canon à eau électrique, les moyens de commande étant adaptés à fermer immédiatement l'électrovanne associée, lorsqu'ils reçoivent un signal représentatif d'une position erronée par rapport au secteur d'arrosage prédéterminé émis par l'encodeur et à arrêter immédiatement le mouvement des moyens de mise en mouvement sans temporisation.

10. Dispositif selon l'une quelconque des revendications 1 à 9, **caractérisé en ce que** le programmateur (105, 205, 305, 405, 605) est adapté à alimenter électriquement, en permanence, chaque canon à eau électrique, les moyens de commande (140, 240, 340, 440, 540, 640, 740) étant adaptés à fermer immédiatement l'électrovanne associée lorsqu'ils reçoivent un signal de fin de période d'arrosage de la part du programmateur et à arrêter le mouvement des moyens de mise en mouvement après une temporisation prédéterminée suivant la fermeture de l'électrovanne associée.

11. Dispositif selon l'une quelconque des revendications 1 à 10, **caractérisé en ce que** le programmateur (105, 205, 305, 405, 605) comporte trois sorties (210, 215, 220, 225, 310, 315, 320, 325)par canon électrique, l'une des dites sorties portant une tension permanente destinée à maintenir, en permanence, l'alimentation électrique de chaque canon électrique.

12. Dispositif selon l'une quelconque des revendications 1 à 11, **caractérisé en ce que** le programmateur (105, 205, 305, 405, 605) est adapté à maintenir en permanence une tension aux bornes des canon électriques et à envoyer des signaux à chaque canon à eau électrique, par courant porteur et chaque canon à eau électrique comporte un identifiant unique et un moyen de décodage desdits signaux.

13. Dispositif selon l'une quelconque des revendications 1 à 12, **caractérisé en ce qu'**il comporte une télécommande (760) adaptée à émettre des messages à destination de chaque canon à eau, chaque message comportant un identifiant unique de canon à eau, et chaque canon à eau électrique comporte des moyens de réception des signaux émis par la télécommande.

14. Dispositif selon l'une quelconque des revendications 1 à 13, **caractérisé en ce que** chaque canon à eau électrique comporte au moins une entrée de signaux provenant d'un capteur.

15. Dispositif selon l'une quelconque des revendications 1 à 14, **caractérisé en ce que** chaque canon à eau électrique comporte des moyens de communication avec d'autres canons à eau électriques.

16. Utilisation d'un dispositif d'arrosage selon l'une quelconque des revendications 1 à 15 dans un procédé d'arrosage.

17. Procédé d'arrosage mettant en oeuvre un dispositif d'arrosage selon l'une quelconque des revendications 1 à 15, comportant au moins un programmateur adapté à commander les périodes de fonctionnement et de mouvement d'au moins un canon à eau électrique et au moins un canon à eau électrique associé à une électrovanne et comportant des moyens de commande de ladite électrovanne et de commande de moyens de mise en mouvement dudit canon électrique, **caractérisé en ce qu'**il comporte, pour chaque période d'arrosage:
- une étape de fermeture de ladite électrovanne et
- après une temporisation prédéterminée suivant ladite étape de fermeture d'électrovanne, une étape d'arrêt des moyens de mise en mouvement.

## Patentansprüche

1. Bewässerungsvorrichtung (100, 200, 300, 600, 700), die Folgendes umfasst:
- eine Programmiereinrichtung (105, 205, 305, 405, 605, 705), ausgelegt zum Steuern der Betriebs- und Bewegungsperioden von wenigstens einer elektrischen Wasserkanone (130, 230, 330, 430, 530, 630, 730), und
- wenigstens eine elektrische Wasserkanone (130, 230, 330, 430, 530, 630, 730), wobei jede elektrische Wasserkanone mit einem Elektroventil (135, 235, 335, 435, 535, 635, 735) assoziiert ist und Mittel zum Steuern des genannten Elektroventils (140, 240, 340, 440, 540, 640, 740) und zum Steuern von Antriebsmitteln (145, 245, 345, 445, 545, 645, 745) der elektrischen Kanone (130, 230, 330, 430, 530, 630, 730) umfasst, und
- eine externe Stromversorgung (101, 201, 301, 401, 501, 601, 701) für die Wasserkanone,
**dadurch gekennzeichnet, dass** die genannten Steuermittel (140, 240, 340, 440, 540, 640, 740) so ausgelegt sind, dass sie am Ende jeder Bewässerungsperiode das genannte Elektroventil (135, 235, 335, 435, 535, 635, 735) schließen und die Antriebsmittel (145, 245, 345, 445, 545, 645, 745) nach einer vorbestimmten Verzögerung nach dem Schließen des Elektroventils stoppen.

2. Bewässerungsvorrichtung (100, 200, 300, 600, 700) nach Anspruch 1, **dadurch gekennzeichnet, dass** die genannten Steuermittel (140, 240, 340, 440, 540, 640, 740) zum Öffnen oder Schließen des genannten Elektroventils (135, 235, 335, 435, 535, 635, 735) und/oder zum Betätigen oder Stoppen der Antriebsmittel (145, 245, 345, 445, 545, 645, 745) ausgelegt sind.

3. Bewässerungsvorrichtung nach Anspruch 1 oder 2, **dadurch gekennzeichnet, dass** die genannten Steuermittel (140, 240, 340, 440, 540, 640, 740) zum Schließen des genannten Elektroventils (135, 235, 335, 435, 535, 635, 735) und zum Stoppen der Antriebsmittel (145, 245, 345, 445, 545, 645, 745) ausgelegt sind.

4. Vorrichtung nach einem der Ansprüche 1 bis 3, **dadurch gekennzeichnet, dass** die Programmiereinrichtung (105, 205, 305, 405, 605) gemäß der Erfindung für jede elektrische Wasserkanone eine Programmiereinrichtung (105, 205, 305, 405, 605), eine elektronische oder elektromechanische Schaltvorrichtung (455, 555) wie zum Beispiel ein Relais umfasst, das mit zwei unterschiedlichen Spannungsausgängen verbunden ist, von denen eines der Zweipunktregler (410, 510) und das andere (425, 525) eine Dauerspannung ist, wobei der Ausgang der genannten elektronischen und/oder elektromechanischen Schaltvorrichtung mit der genannten elektrischen Wasserkanone verbunden ist und die Steuerung der elektronischen und/oder elektromechanischen Schaltvorrichtung mit dem Spannungsausgang des Zweipunktreglers der Programmiereinrichtung verbunden ist.

5. Vorrichtung nach einem der Ansprüche 1 bis 4, **dadurch gekennzeichnet, dass** wenigstens eine elektrische Wasserkanone einen Codierer (250, 350, 450, 550, 650, 750) umfasst, der Signale ausgibt, die die Position und/oder die Bewegungen der Antriebsmittel repräsentieren.

6. Vorrichtung nach einem der Ansprüche 1 bis 5, **dadurch gekennzeichnet, dass** die Steuermittel (140, 240, 340, 440, 540, 640, 740) zum Steuern der Rückkehr der Bewässerungsanlage in eine vorbestimmte Position ausgelegt sind.

7. Vorrichtung nach einem der Ansprüche 1 bis 5, **dadurch gekennzeichnet, dass** die Steuermittel (140, 240, 340, 440, 540, 640, 740) zum Steuern der Rückkehr der Bewässerungsanlage in eine vorbestimmte Position am Ende jeder Bewässerungsperiode ausgelegt sind.

8. Vorrichtung nach einem der Ansprüche 1 bis 7, **dadurch gekennzeichnet, dass** die Steuermittel (140, 240, 340, 440, 540, 640, 740) zum Messen und Speichern der Dauer einer Bewässerungsperiode und zum Steuern des Schließens des assoziierten Elektroventils nach einer vorbestimmten Verzögerung vor dem Ende der gespeicherten Bewässerungsperiode ausgelegt sind.

9. Vorrichtung nach einem der Ansprüche 1 bis 8, **dadurch gekennzeichnet, dass** die Programmiereinrichtung (105, 205, 305, 405, 605) zum permanenten elektrischen Versorgen jeder elektrischen Wasserkanone ausgelegt ist, wobei die Steuermittel zum sofortigen Schließen des assoziierten Elektroventils, wenn sie ein Signal empfangen, das eine falsche Position in Bezug auf den vorbestimmten Bewässerungssektor repräsentiert, ausgegeben von dem Codierer, und zum sofortigen Stoppen der Bewegung der Antriebsmittel ohne Verzögerung ausgelegt sind.

10. Vorrichtung nach einem der Ansprüche 1 bis 9, **dadurch gekennzeichnet, dass** die Programmiereinrichtung (105, 205, 305, 405, 605) zum permanenten elektrischen Versorgen jeder elektrischen Wasserkanone ausgelegt ist, wobei die Steuermittel (140, 240, 340, 440, 540, 640, 740) zum sofortigen Schließen des assoziierten Elektroventils, wenn sie ein Signal des Endes der Bewässerungsperiode seitens der Programmiereinrichtung empfangen, und zum Stoppen der Bewegung der Antriebsmittel nach einer vorbestimmten Verzögerung nach dem Schließen des assoziierten Elektroventils ausgelegt sind.

11. Vorrichtung nach einem der Ansprüche 1 bis 10, **dadurch gekennzeichnet, dass** die Programmiereinrichtung (105, 205, 305, 405, 605) drei Ausgänge (210, 215, 220, 225, 310, 315, 320, 325) pro elektrische Kanone umfasst, von denen einer eine permanente Spannung führt mit dem Ziel, die elektrische Versorgung jeder elektrischen Kanone permanent zu halten.

12. Vorrichtung nach einem der Ansprüche 1 bis 11, **dadurch gekennzeichnet, dass** die Programmiereinrichtung (105, 205, 305, 405, 605) zum permanenten Halten einer Spannung an den Anschlüssen der elektrischen Kanonen und zum Senden von Signalen zu jeder elektrischen Wasserkanone per Trägerstrom ausgelegt ist, und jede elektrische Wasserkanone eine eindeutige Kennung und ein Mittel zum Decodieren der genannten Signale umfasst.

13. Vorrichtung nach einem der Ansprüche 1 bis 12, **dadurch gekennzeichnet, dass** sie eine Fernsteuerung (760) umfasst, ausgelegt zum Ausgeben von Nachrichten an jede Wasserkanone, wobei jede Nachricht eine eindeutige Kennung der Wasserkanone umfasst und jede elektrische Wasserkanone Mittel zum Empfangen der von der Fernsteuerung ausgegebenen Signale umfasst.

14. Vorrichtung nach einem der Ansprüche 1 bis 13, **dadurch gekennzeichnet, dass** jede elektrische Wasserkanone wenigstens einen Eingang für von einem Sensor kommende Signale umfasst.

15. Vorrichtung nach einem der Ansprüche 1 bis 14, **dadurch gekennzeichnet, dass** jede elektrische Wasserkanone Mittel zum Kommunizieren mit anderen elektrischen Wasserkanonen umfasst.

16. Verwendung einer Bewässerungsvorrichtung nach einem der Ansprüche 1 bis 15 in einem Bewässerungsverfahren.

17. Bewässerungsverfahren unter Anwendung einer Bewässerungsvorrichtung nach einem der Ansprüche 1 bis 15, umfassend wenigstens eine Programmiereinrichtung, ausgelegt zum Steuern der Betriebs- und Bewegungsperioden von wenigstens einer elektrischen Wasserkanone und wenigstens einer elektrischen Wasserkanone, die mit einem Elektroventil assoziiert ist und Mittel zum Steuern des genannten Elektroventils und zum Steuern von Antriebsmitteln der genannten elektrischen Kanone umfasst, **dadurch gekennzeichnet, dass** es für jede Bewässerungsperiode Folgendes beinhaltet:
- einen Schritt des Schließens des genannten Elektroventils, und
- einen Schritt des Stoppens von Antriebsmitteln nach einer vorbestimmten Verzögerung nach dem genannten Schritt des Schließens des Elektroventils.

## Claims

1. Sprinkler device (100, 200, 300, 600, 700) comprising
- an automatic controller (105, 205, 305, 405, 605, 705) suitable for controlling the periods of operation and movement of at least one electrical water gun (130, 230, 330, 430, 530, 630, 730) and
- at least one electrical water gun (130, 230, 330, 430, 530, 630, 730), each electrical water gun being associated with an electrically operated valve (135, 235, 335, 435, 535, 635, 735) and comprising means for controlling said electrically operated valve (140, 240, 340, 440, 540, 640, 740) and for controlling means for moving (145, 245, 345, 445, 545, 645, 745) said electrical gun (130, 230, 330, 430, 530, 630, 730), and
- an external electrical power supply (101, 201, 301, 401, 501, 601, 701) for the water gun,
**characterized in that** said control means (140, 240, 340, 440, 540, 640, 740) are suitable, at the end of each period of sprinkling, for closing said electrically operated valve (135, 235, 335, 435, 535, 635, 735) and stopping the movement means (145, 245, 345, 445, 545, 645, 745) after a predetermined time delay following the closure of the electrically operated valve.

2. Sprinkler device (100, 200, 300, 600, 700) according to claim 1, **characterized in that** said control means (140, 240, 340, 440, 540, 640, 740) are suitable for opening or closing said electrically operated valve (135, 235, 335, 435, 535, 635, 735) and/or for actuating or stopping the movement means (145, 245, 345, 445, 545, 645, 745).

3. Sprinkler device according to any one of claims 1 or 2, **characterized in that** said control means (140, 240, 340, 440, 540, 640, 740) are suitable for closing said electrically operated valve (135, 235, 335, 435, 535, 635, 735) and for stopping the movement means (145, 245, 345, 445, 545, 645, 745).

4. Device according to any one of claims 1 to 3, **characterized in that** the automatic controller (105, 205, 305, 405, 605) according to the invention comprises, for each electrical water gun, an automatic controller (105, 205, 305, 405, 605), an electronic and/or electromechanical switching device (455, 555), such as for example a relay connected to two different voltage outputs, of which one is the on/off control (410, 510) and the other (425, 525) is a steady-state voltage, the output of said electronic and/or electromechanical switching device being connected to said electrical water gun and the control of said electronic and/or electromechanical switching device being connected to the on/off control voltage output of the automatic controller.

5. Device according to any one of claims 1 to 4, **characterized in that** at least one electrical water gun comprises an encoder (250, 350, 450, 550, 650, 750) transmitting signals showing the position and/or movements of the movement means.

6. Device according to any one of claims 1 to 5, **characterized in that** the control means (140, 240, 340, 440, 540, 640, 740) are suitable for controlling the return of the sprinkler to a predetermined position.

7. Device according to any one of claims 1 to 5, **characterized in that** the control means (140, 240, 340, 440, 540, 640, 740) are suitable for controlling the return of the sprinkler to a predetermined position, at the end of each period of sprinkling.

8. Device according to any one of claims 1 to 7, **characterized in that** the control means (140, 240, 340, 440, 540, 640, 740) are suitable for measuring and storing the duration of a period of sprinkling and for controlling the closure of the associated electrically operated valve after a predetermined time delay before the end of the stored period of sprinkling.

9. Device according to any one of claims 1 to 8, **characterized in that** the automatic controller (105, 205, 305, 405, 605) is suitable for, constantly, supplying electricity to each electrical water gun, the control means being suitable for immediately closing the associated electrically operated valve when they receive a signal showing an incorrect position in relation to the predetermined sprinkling sector transmitted by the encoder and immediately stopping the movement of the movement means without time delay.

10. Device according to any one of claims 1 to 9, **characterized in that** the automatic controller (105, 205, 305, 405, 605) is suitable for, constantly, supplying electricity to each electrical water gun, the control means (140, 240, 340, 440, 540, 640, 740) being suitable for immediately closing the associated electrically operated valve when they receive a signal of the end of the period of sprinkling from the automatic controller and stopping the movement of the movement means after a predetermined time delay following the closure of the associated electrically operated valve.

11. Device according to any one of claims 1 to 10, **characterized in that** the automatic controller (105, 205, 305, 405, 605) comprises three outputs (210, 215, 220, 225, 310, 315, 320, 325) per electrical gun, one of said outputs carrying a steady-state voltage intended to maintain, constantly, the electrical power supply to each electrical gun.

12. Device according to any one of claims 1 to 11, **characterized in that** the automatic controller (105, 205, 305, 405, 605) is suitable for constantly maintaining a voltage at the terminals of the electrical guns and sending signals to each electrical water gun, by carrier current, and each electrical water gun comprises a unique identifier and a means for decoding said signals.

13. Device according to any one of claims 1 to 12, **characterized in that** it comprises a remote control (760) suitable for transmitting messages to each water gun, each message comprising a unique water gun identifier, and each electrical water gun comprises means for receiving the signals transmitted by the remote control.

14. Device according to any one of claims 1 to 13, **characterized in that** each electrical water gun comprises at least one input for signals coming from a sensor.

15. Device according to any one of claims 1 to 14, **characterized in that** each electrical water gun comprises means for communicating with other electrical water guns.

16. Use of a sprinkler device according to any one of claims 1 to 15 in a sprinkling process.

17. Sprinkling process using a sprinkler device according to any one of claims 1 to 15, comprising at least one automatic controller suitable for controlling the periods of operation and movement of at least one electrical water gun and at least one electrical water gun associated with an electrically operated valve and comprising means for controlling said electrically operated valve and for controlling means for moving said electrical gun, **characterized in that** it comprises, for each period of sprinkling:
- a step of closing said electrically operated valve and,
- after a predetermined time delay following said step of closing the electrically operated valve, a step of stopping the movement means.
